# EUROPEAN PATENT APPLICATION

(11) **EP 1 333 348 A1**
(43) Date of publication of application: **06.08.2003**
(21) Application number: 02075491.7
(22) Date of filing: 05.02.2002
(51) Int. Cl.: G05D 16/20, B01F 3/02, F17C 13/02

(54) **Back-pressure regulator**

(71) Applicant: Avantium International B.V., 1014 BV Amsterdam (NL)
(72) Inventor: Bracht, Maarten, 1019 XD Amsterdam (NL); van den Brink, Peter John, 3972 EJ Driebergen (NL); de Jonge, Hans, 1031 CM Amsterdam (NL)
(74) Representative: Brookhuis, Hendrik Jan Arnold

(57) **Abstract**

Back-pressure regulator (1) comprising: a conduit (2) having an inlet (3) and an outlet (4) for fluid, the inlet (3) of the conduit (2) being connected to an outlet of a fluid container (5); a flow restrictor (7) between the inlet (3) and the outlet (4) of the conduit (2); a pressure control fluid supply means (8) connected to the conduit (2), between the inlet (3) of the conduit (2) and the flow restrictor (7); and control means (12) designed to compare the pressure value detected by a pressure detector (9) with a reference pressure value, and in response thereto, make the supply means (8) supply a suitable amount of pressure control fluid (preferably inert fluid) to the conduit (2) if the pressure value detected by the pressure detector (9) is below the reference pressure value, in order to keep constant the pressure in the conduit (2).

## Description

The present invention relates to a back-pressure regulator.

Several back-pressure regulators are known in practice. Back-pressure regulators are used in industry in which it is desired to maintain a system at a certain pressure, whilst a process such as a reaction is carried out. Suitably, say in a hydrogenation process, high pressure hydrogen is available in a storage vessel at a pressure well above the working pressure required. The pressure of hydrogen emerging from the storage vessel, suitably a cylinder, containing hydrogen under high pressure, say initially at 100 bar, is normally reduced to a lower value, say 10 bar, to prevent pressure waves being formed and can be fine tuned to obtain the actual flow needed in the reactor by means of a flow control valve. Such pressure regulators can be used to control pressure in a closed or in a venting, one-phase system.

In order to keep the environment at the required level (e.g. 5 bar) it is necessary to install a so-called back-pressure regulator downstream of the reactor environment which is capable of maintaining the pressure in the reactor at the required level. In practice this means that such device must be capable of reducing or even closing the passage of gas or liquid in a conduit downstream of the reactor until the pressure has come back to the required level or, conversely, is capable of relieving the pressure by opening the conduit downstream of the reactor to the extent that the passage of gas or liquid is such that the required pressure is maintained again. A back-pressure regulator can also be used in systems, which contain reactants (e.g. hydrogen) that will be consumed or in systems in which higher pressures may be created because of the production of gases or the exothermicity of the reaction contemplated, causing the pressure to increase above the required level.

In some processes, the operator will be faced with a fluid containing both gaseous and liquid components that need to be kept at a certain pressure. The amount of the gaseous and liquid components will be dependent on the type of process(es) envisaged. In the context of this invention the expression "fluid" is meant to comprise materials being either in the gaseous phase or in the liquid phase or mixtures of the two phases as the case may be.

Standard back-pressure regulators are operated by adjusting the throughput through the conduit line by increasing or decreasing the area of the (valve) opening through which the fluid travels by mechanical, pneumatic, electrical or any other means which will be capable of adjusting the throughput to the required level. Systems based on springs or bellows can be suitably applied.

However, when the fluid contains both gaseous and liquid components these standard back-pressure regulators start to malfunction, both due to the *limited dynamic* range of such systems and due to their *relative slow response.* A large dynamic range (typically a factor 1000) is needed because of the significant difference in viscosity between the liquid and the gas phase. This asks for a wide dynamic range of resistance values of the control valve. However most valves do not offer a dynamic range large enough to both control the flow of liquids and gases in a similar volumetric range.

A fast response of the valve is needed to cope with very abrupt changes in viscosity in such systems. When a slug of liquid reaches the valve, because of its high viscosity it passes the area relatively difficult, which as it leads to build up of pressure results in a large opening of the valve. When in such a position suddenly a slug of gas reaches the valve control mechanism, most valves will not able to close fast enough to avoid loss of pressure.

One way to avoid these problems is by separating the gas and liquid before control of the pressure.

A well known problem in industry is that it is difficult to separate gaseous and liquid components in situations where it is required to maintain the total pressure at a required (pre-set) level, especially in systems in which a multitude of vessels is involved or when dealing with systems in which rather small volumes are present. One solution is to introduce a sluice system in the conduit downstream of the reactor in order to drain off liquid which allows the use of a standard gas-phase back-pressure regulator to deal with the setting of the pressure level by controlling only the gaseous component still present. Reference is made in this respect to US patent publications 4,619,11; 4,682,622 and 4,971,104, respectively.

Turning to systems which are designed to operate with rather small reactor volumes, suitably reactor systems operating with a throughput of 100 Nml/minute of gas and of 5 Nml/minute of liquid or less, in particular with systems operating under a gas flow regime of less than 10 Nml/minute of gas and 0,5 Nml/minute of liquid, it was found that, even for systems in which only one phase (either gaseous or liquid) is present it is already very difficult to reliably control the back-pressure, let alone for systems in which two phases (gaseous and liquid) are present. The option of introducing a sluice is no longer possible in that the size of the equipment is so small that fitting sluice devices is no longer feasible. Moreover, such systems suffer from the presence of so-called "dead volumes" which has a further disadvantage in that it is prone to a built-up of sludge which will hamper and eventually block the normal operation of the system.

Further, in the area of high throughput experimentation dead volumes lead to longer purging times when online analysis is used to analyse the effluent of the reactors or to collect a sample for offline analysis.

Moreover, in conditions of rather small reaction vessels, and, in particular in systems in which use is made of arrays of small reactors such as in arrays currently envisaged for high throughput experimentation such as in rapid catalyst screening, a number of additional problems needs to be addressed. In particular the consequences of operating at rather high pressures need to be taken into account and, together with the small volumes in the total system set stringent requirements in order to be able to operate leak-tight.

Further, in small reactor systems the small volumes lead to much higher sensitivity of the pressure to fluctuations of the back pressure regulating system. These pressure fluctuations may cause large variations in the reaction kinetics of the individual reactors resulting in erroneous results. The pressure fluctuations also bring about variations in flow through the reactors causing different residence times in the reactor. This also leads to erroneous results.

Also, the so-called "dead-volume" which is nearly always present in valve systems becomes relatively large when down scaling standard back-pressure regulators which has an undesired influence of the working of the device.

It is an object of the present invention to solve the above and other problems.

It is a further object of the present invention to provide an alternative back-pressure regulator having a surprisingly simple design.

It is a particular object of the present invention to provide an alternative and surprisingly simple back-pressure regulator for regulating the pressure in the reactors of a high throughput experimentation apparatus.

To this end the present invention provides a back-pressure regulator comprising:
- a first conduit having an inlet and an outlet for fluid, the inlet of the first conduit being connected to an outlet of a fluid container;
- a first flow restrictor between the inlet and the outlet of the first conduit; and
- pressure control fluid supply means connected to the first conduit, between the inlet of the first conduit and the first flow restrictor, the supply means being capable of obtaining a substantially constant pressure in the first conduit.

Herewith a very simple and effective back-pressure regulator is obtained, which can be used both in a one-phase and in a two-phase fluid system allowing a substantially constant pressure upstream from the back-pressure regulator to be maintained.

With "back-pressure regulator" a regulator is meant used to regulate the pressure downstream of the fluid container that is located upstream of the pressure regulator.

The person skilled in the art will understand that with "fluid container" any container or vessel is meant, downstream of which the pressure is to be regulated. Usually, the container will be a reactor.

The outlet of the first conduit may be connected to e.g. an analyser or a fluid sampling device, if desired.

The back-pressure regulator of the present invention is in particular of use in a gas/liquid pressure environment which hitherto was impossible to control satisfactorily on a large scale, let alone on a small scale. The device is capable of operating reliable for a long time under severe reaction conditions, which has a tremendous advantage, in particular when used in rapid screening duty. Moreover, it can be manufactured at reasonable costs and it enjoys operational robustness.

According to a first preferred embodiment, the supply means comprise a pressure reducing regulator. A pressure reducing regulator is often also denoted "pressure reducer". This pressure reducer may be connected to a pressurized supply vessel, like for instance a gas cylinder. The pressure reducer reduces the pressure of the pressure control fluid to the desired pressure level. Pressure reducers are well known to those skilled in the art and may be mechanically or electronically controlled. Preferably, the pressure reducer is designed in this embodiment of the back-pressure regulator according to the present invention, to supply and reduce an inert fluid, preferably nitrogen gas. Using an inert fluid, the analysis of the fluid samples in the analyzer, if any, is not affected. Also due to it's inertness the fluid will not interact chemically with the fluid originating form the reactor.

According to a second preferred embodiment of the back-pressure regulator of the present invention, the back-pressure regulator comprises:
- a first pressure detector for measuring a fluid pressure value in the first conduit; and
- control means designed to compare the pressure value detected by the first pressure detector with a reference pressure value, and in response thereto, make the supply means supply a suitable amount of pressure control fluid to the first conduit if the pressure value detected by the first pressure detector is below, e.g. a pre-set amount, the reference pressure value.

According to the present invention "a suitable amount of pressure control fluid" means such an amount of pressure control fluid needed to keep the pressure (compared to the reference pressure value) detected by the pressure detector at the required level.

Usually the reference pressure value used in the fluid pressure regulator according to the present invention will be a suitable preset value. If desired, the preference pressure value can be related 5 to the pressure value in another conduit. To this end the present invention provides a back-pressure regulator wherein the control means are designed to compare the pressure value detected by the pressure detector with the reference pressure value detected by a second pressure detector for measuring the fluid pressure in a second conduit.

According to a third preferred embodiment, the supply means for pressure control fluid are designed to keep the pressure control 5 fluid in a vapour/liquid equilibrium. Herewith no moving constructional parts are present in the process fluid stream. Also no pressure detector is required to regulate the pressure. The person skilled in the art will understand that any means for keeping the pressure control fluid in a vapour/liquid equilibrium may be used, for example a reservoir containing the pressure control fluid provided with temperature control means, such as heating means, capable of maintaining the pressure control fluid at said equilibrium. Instead or in addition pressure control means may be used. In this case "a pressure control fluid" means a fluid not 5 chemically interacting with the (process) fluid originating from the reactor. The pressure control fluid may e.g. be freon, water, propane, ethane, ...

Preferably, the supply means of the back-pressure regulator according to the present invention are designed to supply an inert 0 fluid, preferably nitrogen gas, helium gas or argon gas. Using an inert fluid, the analysis of fluid samples in the analyser, if any, is not affected. As supply means e.g. any controllable valve may be used.

The person skilled in the art will readily understand that as 5 an inert fluid any fluid may be used which does not have a significant influence on the optional analysis of fluid samples. Nitrogen gas is preferably used, as it is an inexpensive and easy usable gas.

Preferably, the first pressure detector is placed between the 0 pressure control fluid supply means and the first conduit.

Herewith no pressure detector is present in the first conduit, thereby minimizing possible 'hold up' of (process) fluid contained therein. Also herewith the pressure detector will not be exposed to any harmful characteristic (corrosiveness, contamination) of the 5 fluid originating from the reactor.

Further the back-pressure regulator preferably comprises a pressure relief valve between the supply means and the first conduit. Herewith it is possible to prevent the occurrence of a pressure in the first conduit above a certain limit. When the back-pressure regulator according to the present invention is used in an apparatus comprising several small tubes as reactors, such as in high throughput experimentation, it is preferred that the pressure relief valve can be operated to relief the pressure above 0,001 bar.

According to an advantageous embodiment of the back-pressure regulator according to the present invention, the flow restrictor is adjustable. Herewith the upper limit of the flow of the fluid exiting the conduit of the back-pressure regulator can be easily chosen.

According to a further preferred embodiment, the back-pressure regulator comprises a buffer system, preferably placed between the pressure control fluid supply means and the first conduit. Such a buffer system will attenuate sharp pressure changes that for instance can be caused by sharp changes in flows to or from the first conduit, or that can be caused by opening or closing valves leading to or from the first conduit. When due to such events the demand for pressure control fluid suddenly increases and the pressure control fluid supply means do not respond quickly enough, the volume of pressure control fluid already present in the buffer system will moderate the drop in pressure in the first conduit. Vice versa, when the demand of pressure control fluid suddenly drops the buffer will be able to take up some pressure control fluid without drastic increase of pressure.

Such buffer system is highly useful when dealing with fluids in the first conduit that consist of two phases with different viscosity. The large difference in viscosity will cause abrupt changes in demand of pressure supply means.

The buffer system will also be highly useful when the pressure reducer or pressure control system has a slow response.

As buffer system any container with an internal volume may be used. As such for instance a vessel or a long tube will be suitable. The buffer system may be put in-line with the conduit that leads from the pressure supply means to the first conduit. However, it may also be connected with a T-connection to the conduit that leads from the pressure control fluid supply means to the first conduit.

As the response time of a pressure reducer typically is in the order of one second, for an optimal buffering the volume of the buffer system should be such that it should be able to supply fluid for at least a period of at least one second(s). Therefore its volume (ml) preferably should exceed the average volume (ml) of all fluid flowing through the first conduit during the period of one second. For example, if the volumetric flow of the fluid through first conduit is 1 Nml/s the volume of the buffer system preferably should be at least 1 ml. Persons skilled in the art will understand that preferably the buffer volume is significantly higher than that value, 5 i.e. the volume of the buffer system is preferably larger than the total volume of fluid flowing through first conduit during the period of one second.

Further it is preferred, that the first conduit is connectable to the outlets of at least two reactors. Herewith the pressure in several reactors may be regulated using only one regulator. Of course, a selector valve may be present between the inlet of the first conduit and the outlet of each of the reactors.

In another aspect of the present invention the pressure control fluid supply means are connectable to more than one first conduits. With such an arrangement it is possible to control the back pressure of a multitude of reactors using only one pressure regulator. In a further aspect the present invention relates to an apparatus, in particular for high throughput experimentation, comprising the back-pressure regulator according to the present invention. Usually, in high throughput experimentation, the outlet of the first conduit will be connected to an analyser, and/or instead, to a fluid sampling device. In case of more than one first conduit, the (low pressure) outlets of the multitude of first conduits will either be collected or analyzed in parallel or led to a special type of multi-position valve to be collected or analyzed sequentially. Such multi-position valves are designed to select one stream form a multitude of fluid streams to flow to a selected stream outlet while combining the non-selected streams to flow to one common outlet. Such multi-position valves are commercially available and for instance described in the 0 catalogue of VICI AG (Valco International).

In a similar yet different embodiment of the present invention the back-pressure regulator may be combined with the above mentioned multi-position valve. Now the multi-position valve may be positioned between the reactor outlets and the back-pressure regulator. By 5 connecting the pressure supply means of the back-pressure regulator to both the common outlet and the selected stream outlet the pressure of all fluid streams leading to the multi-position valve can be controlled. The selected stream is led to an on-line analyzer for analysis. Sampling to the analyzer can take place at any point between the exit of the multi-position valve and the restrictor, but also at low pressure behind the restrictor.

The back-pressure regulator according to the present invention is suitably used in small scale operations since it meets the critical parameters therefore, in particular under conditions of using a fluid containing both gaseous and liquid components as it has a large dynamic range. In particular, it can be used advantageously in situations wherein use is made of reactor vessel arrays in which a number of (different) physical and/or chemical operations can be performed, either simultaneously or sequentially.

The desire to perform a multitude of operations in a short time is well-known to those skilled in the art and a number of systems has already been proposed, and some are commercially available, to decrease the time in which, and possibly, the size which physical and/or chemical operations have to be performed. However, there is still room for improvement in carrying out operations at elevated temperature and pressure in reactor vessel arrays.

It is also possible to make use of a number of back-pressure regulators (each back-pressure regulator being connected to one reactor or a plurality of reactors) pre-set at different levels to operate at different pressure levels whilst providing the reactor vessels in the array with a fixed pressure. This allows the option to perform series of experiments at different pre-set pressure levels which is highly advantageous in combinatorial chemistry.

Further the present invention relates to a process for regulating the back-pressure in a conduit being connected to an outlet of a reactor, the conduit containing a flow restrictor, wherein a pressure control fluid is fed to the conduit, such that a substantially constant pressure is obtained in the conduit.

In one embodiment of the process according to the invention, the pressure of the pressure control fluid is kept constant by a pressure reducing regulator.

In an alternative embodiment, the pressure of a fluid originating from the reactor that is fed to the conduit is measured by a pressure detector obtaining a fluid pressure value, the measured fluid pressure value is compared with a reference pressure value, and a suitable amount of pressure control fluid is supplied to the conduit if the pressure detector measures a pressure value which is below, e.g. a pre-set amount, the reference pressure value.

In a further embodiment of the process according to the invention, the pressure control fluid is kept in a vapour/liquid equilibrium.

In yet another embodiment of the process according to the invention, the pressure control fluid is fed to a multitude of conduits, such that a substantially constant pressure is obtained in all conduits.

In another preferred embodiment of the process according to the invention, the pressure control fluid is fed to two outlet conduits of a multi-position valve, such that a substantially constant pressure is obtained in both conduits and the selected stream exiting the multi-position valve is analysed.

The present invention will hereinafter be illustrated in more detail by a drawing. Same reference numbers refer to similar elements. Herein shows:
Figure 1 a schematic diagram of the back-pressure regulator according to a first embodiment of the present invention;
Figure 2 a schematic diagram of the back-pressure regulator according to a further embodiment of the present invention;
Figure 3 a schematic diagram of the back-pressure regulator according to an alternative embodiment of the present invention; and
Figure 4 and Figure 5 a schematic diagram of an apparatus, in particular for high throughput experimentation, comprising the back-pressure regulator of the present invention.

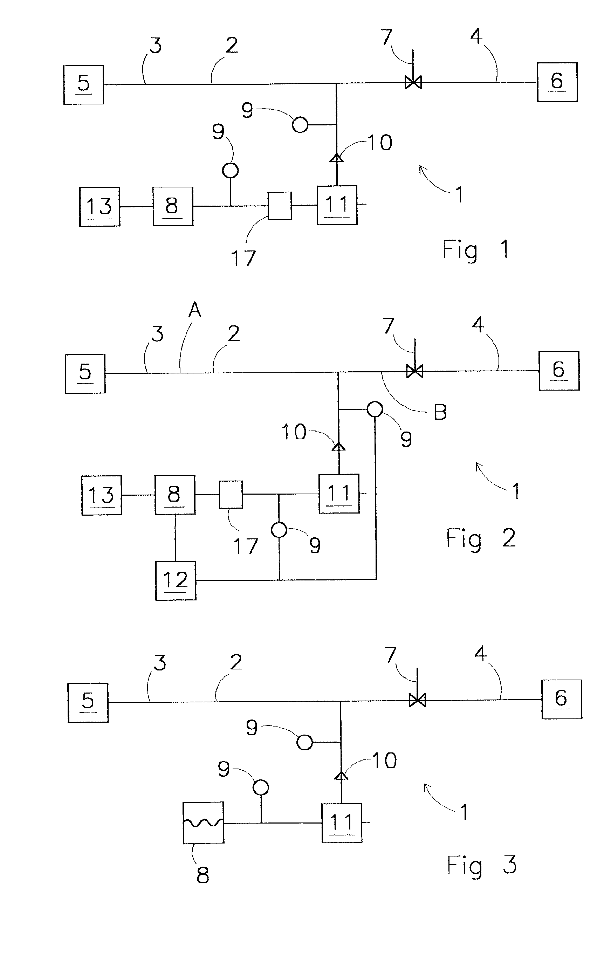

Figure 1 shows a schematic diagram of a back-pressure regulator 1 according to the present invention. The back-pressure regulator 1 comprises a conduit 2 having an inlet 3 and an outlet 4 for fluid, wherein the inlet 3 of the conduit 2 is connected (in the shown embodiment) to the outlet of a container, e.g. a reactor or vessel 5. The outlet 4 of the conduit 2 is connected to the inlet of an analyser 6 (such as a MS, GC, etc.). However, persons skilled in the art will recognize that analyser 6 can be connected to any position on the first conduit 2, such as directly after the reactor vessel 5 or directly after the inlet of the pressure control fluid into the first conduit 2. Between the inlet 3 and the outlet 4 of the conduit 2 a flow restrictor 7 is placed. Suitably, as a flow restrictor 7 a needle valve, capillary, electronically adjustable valve, etc. may be used. The back-pressure regulator 1 further comprises means 8 for supplying a pressure control fluid to the first conduit 2 such that a constant pressure in the first conduit 2 can be obtained.

In the embodiment of Figure 1, the supply means 8 comprise a pressure reducing regulator. This pressure-reducing controller has internal control means designed to reduce the pressure of the pressure control fluid supplied from a storage vessel 13 of pressure control fluid to a constant pressure downstream of that pressure reducing regulator. As the flow and the supply of the storage vessel is virtually unlimited this pressure will determine the pressure of the downstream conduits, such as first conduit 2. Suitably, as a pressure reducing regulator a mechanical system based on for instance membranes or cylinders can be used. These systems are often based on a spring. Also electronic systems with an internal feed-back mechanism can be used. Further, one or more pressure detectors 9, a 5 pressure relief valve 11 and a one-way valve 10 may be present. Also a buffer system 17 may be present.

Figure 2 shows an alternative embodiment of the back-pressure regulator 1 of the present invention.

In this embodiment at least one pressure detector 9 must be present. Further, the supply means 8 are in this embodiment in the form of adjustable supply means for supplying pressure control fluid. Also, control means 12 are provided. The pressure detector 9, supply means 8 and control means 12 co-operate as follows.

The control means 12 compare, in use of the back-pressure regulator 1, the pressure value detected by the pressure detector 9 with a reference pressure value, and in response thereto make the supply means 8 supply a suitable amount of pressure control fluid to the conduit 2 if the pressure value detected by the pressure detector 9 is e.g. a pre-set amount below the reference pressure value. The 0 supply means 8 are preferably designed to supply an inert fluid, such as nitrogen gas. To this end i.e. a reservoir 13 for inert fluid may be used.

The pressure detector 9 may, and preferably will, be present between supply means 8 and the first conduit 2. However the pressure 5 detector 9 may also be present in other positions, as denoted with A and B in Figure 2. Also, more than one pressure detector 9 may be present, if desired, to monitor the pressure on different locations.

In use of the back-pressure regulator 1 according to Figure 2 a (process) fluid is transported from the reactor 5 to the inlet 3 of the conduit 2. If the pressure detector 9 detects a value which is (e.g. a pre-set amount) below the reference pressure value, then the control means 12 will make the supply means 8 supply a suitable amount of pressure control fluid, such as e.g. inert nitrogen gas. Hereby the occurrence of pressure variations in the conduit 2 are prevented.

If desired, the control means 12 may be designed to compare the pressure value detected by the pressure detector 9 with a pressure value detected by a second pressure detector (not shown) for measuring the fluid pressure in a second conduit (not shown), instead of comparing it with a pre-set reference pressure value. In that case the system is useful for maintaining a constant pressure difference between two first conduits.

In the embodiment of Figure 3, the supply means 8 are designed 5 to keep the pressure control fluid in a vapour/liquid equilibrium. To this end the supply means 8 can be operated such, e.g. using non-shown temperature control means such as heating means, that a vapour/liquid equilibrium is obtained in the supply means 8. Further, although not required, a pressure detector 9, such as a pressure gauge, may be present for measuring a fluid pressure value in the conduit 2. The pressure detector 9 is preferably connected between the supply means 8 and the first conduit 2 to minimize dead volume in the conduit 2, but may also be placed in other positions where the pressure in the first conduit 2 can be measured directly or indirectly.

The person skilled in the art will also understand that further means may be present. For example, the back-pressure regulator may comprise a pressure relief valve 11 between the supply means 8 and the first conduit 2. Also a one-way valve 10 may be present. Also a 0 buffer system may be present.

In use of the back-pressure regulator 1 according to Fig. 3, a (process) fluid is transported from the reactor 5 to the inlet 3 of the conduit 2. As the pressure control fluid is kept in a vapour/liquid equilibrium, any pressure variation in the conduit 2 5 will be balanced by the pressure control fluid.

A person skilled in the art will understand that the pressure to be maintained in the conduit 2 can be preset by selecting appropriate conditions in the supply means 8, e.g. using suitable heating means preferably in combination with temperature control means.

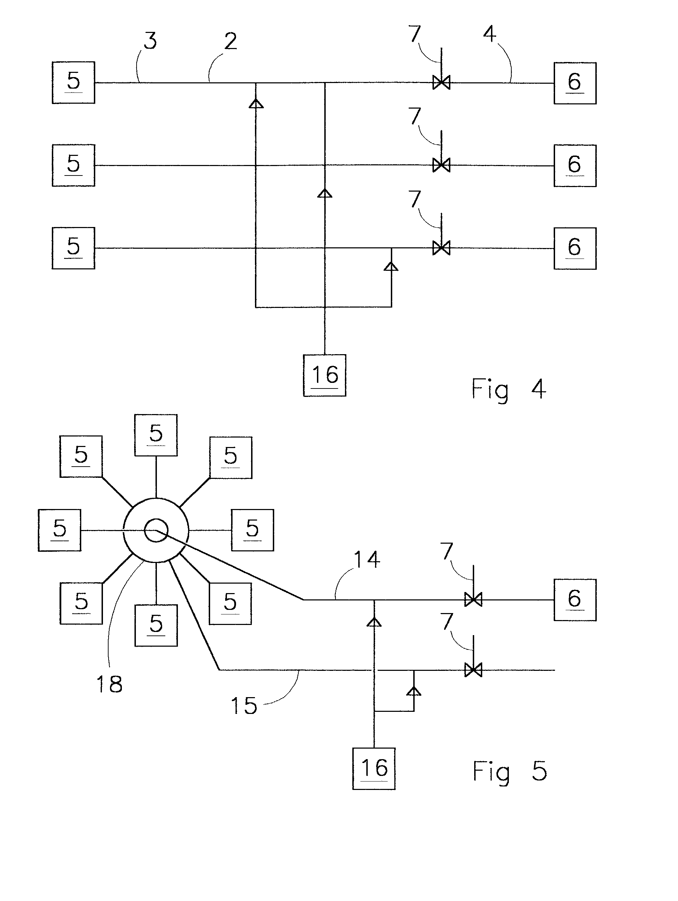

Figure 4 shows a schematic diagram of an apparatus, in particular a high throughput experimentation apparatus containing the back-pressure regulator according to the present invention.

Figure 4 shows an alternative embodiment of the back-pressure regulator 1 in use for controlling a multitude of reactors 5. Hereto, one pressure control fluid system 16, which can be similar to configurations as shown in figure 1-3 (i.e. comprising for example the pressure reducing regulator according to Fig. 1), is connected to the various first conduits 2 downstream of the vessels 5. Each conduit 2 has a restrictor 7.

Persons skilled in the art will recognize that analyzer 6 can be connected to any position of first conduit 2, such as directly after the inlet of the pressure control fluid into the first conduit 2. The person skilled in the art will also understand that further means may be present.

Figure 5 shows another alternative embodiment of the back-pressure regulator in use for controlling a multitude of reactor effluent streams originating from the reactors 5, wherein one of the reactor streams is used for analysis. Hereto one pressure control fluid system 16, which can be similar to configurations as shown in figure 1-3, is connected to a selected stream outlet 14 and a common outlet 15 of a multi-position selector valve 18.

Those who are skilled in the art will recognize that analyzer 6 can be connected to any position on the first conduit 2, such as directly after the reactor vessel 5 or directly after the inlet of the pressure control fluid into the first conduit 2. The person skilled in the art will also understand that further means may be present.

It has been found that the back-pressure regulator according to the present invention not only allows for quick and accurate control in situations in which the flow is essentially gaseous or essentially liquid (i.e. containing at most insignificant amounts of the other phase as the case may be) but also in situations in which the flow is in two-phase mode, i.e. in systems in which both gaseous and liquid components contribute to the fluid. The major advantage of the back-pressure regulator according to the present invention is that it is capable, also in situations operating at rather low flow regimes (e.g. flow regimes of 5 ml/minute, or even less) to deal with fluids containing both gaseous and liquid components. Operating at such low flow regimes in two-phase flow can not be achieved in such a surprising simple manner with existing equipment.

## Claims

1. Back-pressure regulator (1) comprising:
- a first conduit (2) having an inlet (3) and an outlet (4) for fluid, the inlet (3) of the first conduit (2) being connected to an outlet of a fluid container (5);
- a first flow restrictor (7) between the inlet (3) and the outlet (4) of the first conduit (2); and
- pressure control fluid supply means (8) connected to the first conduit (2), between the inlet (3) of the first conduit (2) and the first flow restrictor (7), the supply means (8) being capable of obtaining a substantially constant pressure in the first conduit (2).

2. Regulator according to claim 1, wherein the supply means (8) comprise a pressure reducing regulator.

3. Regulator according to claim 1, wherein the back-pressure regulator (1) comprises:
- a first pressure detector (9) for measuring a fluid pressure value in the first conduit (2); and
- control means (12) designed to compare the pressure value detected by the first pressure detector (9) with a reference pressure value, and in response thereto, make the supply means (8) supply a suitable amount of pressure control fluid to the first conduit (2) if the pressure value detected by the first pressure detector (9) is below the reference pressure value.

4. Regulator according to claim 3, wherein the control means (12) are designed to compare the pressure value detected by the first pressure detector (9) with the reference pressure value detected by a second pressure detector for measuring the fluid pressure in a second conduit.

5. Regulator according to claim 3 or 4, wherein the first pressure detector (9) is placed between the pressure control fluid supply means (8) and the first conduit (2).

6. Regulator according to claim 1, wherein the pressure control fluid supply means (8) are designed to keep the pressure control fluid in a vapour/liquid equilibrium.

7. Regulator according to one or more of the preceding claims, wherein the supply means (8) are designed to supply an inert fluid.

8. Regulator according to one or more of the preceding claims, wherein the regulator (1) comprises a pressure relief valve (11) between the supply means (8) and the first conduit (2).

9. Regulator according to one or more of the preceding claims, wherein the regulator (1) comprises a one-way valve (10) between the supply means (8) and the first conduit (2).

10. Regulator according to one or more of the preceding claims, wherein the first flow restrictor (7) is adjustable.

11. Regulator according to one or more of the preceding claims, wherein the regulator (1) comprises a buffer system (17).

12. Regulator according to one or more of the preceding claims wherein the first conduit (2) is connectable to the outlets of at least two fluid containers (5).

13. Apparatus, in particular for high throughput experimentation, comprising the back-pressure regulator (1) according to one or more of the preceding claims.

14. Process for regulating the back-pressure in a conduit being connected to an outlet of a fluid container, the conduit containing a flow restrictor, wherein a pressure control fluid is fed to the conduit, such that a substantially constant pressure is obtained in the conduit.

15. Process according to claim 14, wherein the pressure control fluid is kept constant by a pressure reducing regulator.

16. Process according to claim 14, wherein the pressure of a fluid originating from the container that is fed to the conduit is measured by a pressure detector obtaining a fluid pressure value, the measured fluid pressure value is compared with a reference pressure value, and a suitable amount of pressure control fluid is supplied to the conduit if the pressure detector measures a pressure value which is below the reference pressure value.

17. Process according to claim 14, wherein the pressure control fluid is kept in a vapour/liquid equilibrium.

18. Process according to any of the preceding claims 14-17, wherein the fluid originating from the fluid container comprises a gas and a liquid.
